(19) Europäisches Patentamt
European Patent Office
Office européen des brevets

(11) **EP 3 902 196 B1**

(12) **EUROPEAN PATENT SPECIFICATION**

(45) Date of publication and mention
of the grant of the patent:
**07.12.2022 Bulletin 2022/49**

(21) Application number: **20170889.8**

(22) Date of filing: **22.04.2020**

(51) International Patent Classification (IPC):
**H04L 9/08** (2006.01)  **H04L 9/40** (2022.01)
**H04L 9/00** (2022.01)  **H04L 9/32** (2006.01)

(52) Cooperative Patent Classification (CPC):
**H04L 9/0891; H04L 9/008; H04L 9/085;
H04L 9/0894; H04L 9/3218; H04L 63/068**

(54) **RESTORATION OF A DISTRIBUTED KEY FROM A BACKUP STORAGE**

WIEDERHERSTELLUNG EINES VERTEILTEN SCHLÜSSELS AUS EINEM SICHERUNGSSPEICHER

RESTAURATION D'UNE CLÉ DISTRIBUÉE À PARTIR D'UN STOCKAGE DE SAUVEGARDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.10.2021 Bulletin 2021/43**

(73) Proprietor: **SEPIOR ApS
8000 Aarhus C (DK)**

(72) Inventor: **JAKOBSEN, Thomas Pelle
8320 Mårslet (DK)**

(74) Representative: **Inspicos P/S
Agern Allé 24
2970 Hørsholm (DK)**

(56) References cited:
**WO-A1-98/49804**

• **CHARIKLEIA ZOURIDAKI ET AL: "Distributed
CA-based PKI for Mobile Ad Hoc Networks Using
Elliptic Curve Cryptography", 24 June 2004
(2004-06-24), PUBLIC KEY INFRASTRUCTURE;
[LECTURE NOTES IN COMPUTER
SCIENCE;;LNCS], SPRINGER-VERLAG,
BERLIN/HEIDELBERG, PAGE(S) 232 - 245,
XP019007629, ISBN: 978-3-540-22216-3 * section
2 ***
• **PRAMANIK S ET AL: "VPSS: a verifiable proactive
secret sharing scheme in distributed systems",
2003 IEEE MILITARY COMMUNICATIONS
CONFERENCE. MILCOM 2003. BOSTON, MA,
OCT. 13 - 16, 2003; [IEEE MILITARY
COMMUNICATIONS CONFERENCE], NEW
YORK, NY : IEEE, US, vol. 2, 13 October 2003
(2003-10-13), pages 826-831, XP010698401, DOI:
10.1109/MILCOM.2003.1290219 ISBN:
978-0-7803-8140-7**

**Description**

FIELD OF THE INVENTION

The present invention relates to a method for restoring a distributed secret key from a backup storage. The method according to the invention allows the secret key to be restored in a secure manner, even if the distributed secret key has been refreshed several times since the backup was created.

BACKGROUND OF THE INVENTION

In threshold encryption schemes or threshold signature schemes, a secret key may be distributed among two or more servers in such a manner that each server holds at least one share of the secret key, and none of the servers has access to all shares, and thereby to the entire secret key. When performing encryption, decryption or signatures, using the key, a subset of at least a predefined number of the servers needs to participate, in order for the transaction to be valid. An adversary would therefore need to compromise several of the servers in order to gain access to a sufficient number of key shares to create a fraudulent signature, encryption or decryption which fulfils the threshold criteria.

Each of the servers will often want to create a backup of its share of the secret key at suitable time intervals. The backups are independent in the sense that the servers do not necessarily create backups at the same time. If one of the servers fails in a manner which requires that its content, including its share of the secret key, is restored from the backup, this server will be restored, but the other servers would not be affected.

For long-term secret keys, for instance secret keys which are secret shared over an extensive time interval, an adversary may gradually gain access to a sufficient number of key shares to be able to use the secret key in a fraudulent manner. In order to avoid this, the secret key, and thereby the key shares, may be refreshed from time to time. Thereby an adversary will not only need to gain access to a sufficient number of key shares. He would also need to gain access to the key shares within the same time window between two refreshes of the secret key. This is sometimes referred to as 'proactive secret sharing'.

However, in the case that the secret key has been refreshed one or more times from the point in time where a backup was created and until a point in time where it is necessary to restore a key share from the backup, then the key share available from the backup differs from the currently applicable key share, and it is therefore no longer valid.

A prior art document is CHARIKLEIA ZOURIDAKI ET AL: "Distributed CA-based PKI for Mobile Ad Hoc Networks Using Elliptic Curve Cryptography", 24 June 2004, PUBLIC KEY INFRASTRUCTURE; [LECTURE NOTES IN COMPUTER SCIENCE;LNCS], SPRINGER-VERLAG, BERLIN/HEIDELBERG, PAGE(S) 232 - 245.

DESCRIPTION OF THE INVENTION

It is an object of embodiments of the invention to provide a method for restoring a distributed secret key from a backup storage, which allows a refreshed secret key to be restored without compromising the secrecy of the secret key.

It is a further object of embodiments of the invention to provide a method for restoring a distributed secret key from a backup storage, which allows a refreshed secret key to be restored, while maintaining proactive secrecy.

The invention provides a method for restoring a distributed secret key from a backup storage, the method comprising the steps of:

- generating an original secret key and distributing the original secret key among two or more servers, each server thereby holding a share of the original secret key and none of the servers holding all shares of the original secret key,

- a first server creating a backup, the backup containing at least the share of the original secret key which is held by the first server,

- the servers refreshing the original secret key at least once, where each refresh comprises the steps of:

  - the servers generating a refreshed distributed secret key and a distributed difference between the previous secret key and the refreshed secret key, each server holding a share of the difference, and the difference constituting a sharing of zero, and the servers discarding their shares of the previous secret key,

  - each server generating a secret version of its share of the difference and sharing the secret version with at least some of the other servers, and

  - each server generating an accumulated secret version of the shares of the difference received from the other servers based on the received secret versions of the shares of the difference and previous accumulated secret versions,

- the first server restoring its share of the original secret key from the backup and requesting the accumulated secret version of its share of the difference from the other servers,

- at least some of the other servers providing the accumulated secret version of the first server's share of the difference to the first server, and

- the first server restoring its share of the latest refreshed secret key from the received accumulated secret version and the restored share of the original secret key.

Thus, the method according to the invention is a method for restoring a distributed secret key from a backup storage. The secret key could, e.g., be a secret encryption/decryption key or a secret signature key, i.e. a secret key applied for generating digital signatures.

According to the method, an original secret key is generated and distributed among two or more servers, in such a manner that each server holds a share of the original secret key and none of the servers holds all shares of the secret key. Accordingly, none of the servers will be able to reconstruct the entire original secret key, and thereby at least a subset of a predefined number of the servers need to participate in order to use the original secret key. The secret key may be generated first and then distributed among the servers, or the servers may cooperate in generating the secret key directly in a distributed form, e.g. using secret sharing.

The servers may be separate hardware servers which are physically separated from each other. As an alternative, the servers may be in the form of virtual servers which may not necessarily be arranged on separate hardware. However, in any event, the servers are separated from each other in the sense that none of the servers can gain access to contents stored on any of the other servers.

Following the generation of the original secret key, a first server creates a backup. Since the first server holds a first share of the original secret key, the created backup contains this first share of the original secret key. The backup of the first server is performed independently of corresponding backups of the other servers.

At a point in time after the backup was created, the servers refresh the original secret key at least once. Each refresh is performed in the manner described below.

Initially, the servers generate a refreshed distributed secret key and a distributed difference between the previous secret key and the refreshed secret key. The refreshed distributed secret key and/or the distributed difference may be generated in a manner which is similar to the manner in which the original secret key was generated. This will be described in further detail below. In any event, each of the servers now holds a share of the refreshed secret key as well as a share of the distributed difference. Furthermore, none of the servers holds all shares of the refreshed secret key and none of the servers holds all shares of the distributed difference. Thus, none of the servers is able to reconstruct neither the entire refreshed secret key, nor the entire distributed difference on its own.

In the present context the term 'previous secret key' should be interpreted to mean the distributed secret key which is valid at the point in time where the refresh is performed. Thus, when the first refresh is performed, the previous secret key is the original secret. When the second refresh is performed, the previous secret key is the refreshed secret key which was generated during the first refresh of the secret key, and so forth.

The distributed difference constitutes a sharing of zero. Thereby the refreshed secret key is identical to the previous secret key, and thereby to the original secret key, in the sense that the difference between the distributed secret keys amounts to zero. However, the shares of the secret key which are held by the servers after the key refreshment are not identical to the shares of the secret key which are held by the servers prior to the key refreshment.

Once the refreshed secret key has been generated and distributed among the servers, the servers discard their respective shares of the previous secret key. Thereby the previous secret key is discarded, and the refreshed distributed secret key is the version which is valid until the next refresh is performed. Furthermore, it is no longer possible to gain access to any of the shares of the previous secret key, and accordingly, it is not possible to construct the entire previous secret key.

Furthermore, each server generates a secret version of its share of the difference and shares the secret version with at least some of the other servers. The secret version could, e.g., be an encrypted version of the share of the difference. Alternatively or additionally, the server may distribute shares of its share of the difference among the other servers, in which case the secret version may be in the form of a secret sharing of the share. In any event, the servers only reveal a secret version of their shares of the difference to the other servers, and only a given server is able to reconstruct its share of the difference from the secret version. Accordingly, none of the servers will be able to gain any knowledge of the actual shares of the difference which are held by the other servers, based on the received secret versions. Thereby, an adversary who has gained access to a previous share of the distributed secret key and a secret version of the share of the difference will not be able to reconstruct the corresponding share of the refreshed distributed key.

Finally, each server generates an accumulated secret version of the shares of the difference received from the other servers based on the received secret versions of the shares of the difference and previous accumulated secret versions. Thus, the accumulated secret versions of the shares of the difference represent the respective differences between the shares of the original distributed secret key and the currently valid shares of the refreshed secret key. The accumulated secret versions may be generated in various manners. This will be described in further detail below.

When the distributed secret key has been refreshed a number of times, in the manner described above, an incident occurs at the first server which requires that the first server, and thereby the share of the distributed secret key which is held by the first server, is restored. However, the share of the distributed key which is stored in the backup storage is a share of the original distributed secret key, and since the distributed secret key was refreshed at least once since the backup was created, the original secret key is no longer valid, and the share of the currently valid secret key, which is held by the first server, can not be immediately and directly restored from the backup.

Instead, the first server restores its share of the original secret key from the backup, i.e. the share which is actually available, and requests the accumulated secret version of its share of the difference from the other servers.

In response to this request, at least some of the other servers provide the accumulated secret version of the first server's share of the difference to the first server. In some embodiments, only one of the other servers may provide the accumulated secret version, in other embodiments two or more of the other servers may provide the accumulated secret version. Accordingly, the first server is now in the possession of its share of the original secret key and a secret representation of the difference between the first server's share of the original secret key and the first server's version of the currently valid secret key. However, since only the accumulated secret version was provided to the first server, none of the servers possess any knowledge regarding the first server's share of any intermediate versions of the refreshed secret key.

Finally, the first server restores its share of the latest refreshed secret key, i.e. the currently valid secret key, from the received accumulated secret version and the restored share of the original secret key. As described above, the accumulated secret version represents the difference between the first server's share of the original secret key and the first server's share of the currently valid secret key, or the latest refreshed secret key. Accordingly, the first server is able to derive this difference from the received accumulated secret version, and thereby the first server can easily reconstruct its share of the latest refreshed secret key from the original share and the derived difference.

Thus, the method according to the invention allows independent backup of secret key shares of a threshold key system, and allows frequent refreshing of the distributed secret key, while maintaining a high security in the sense of a low risk of leaking of the secret key, and allowing the key shares to be reliably recovered from the backup.

In particular, since the restoring of the key share only restores the latest refreshed version of the key share, and not any of the potential intermediate refreshed versions, it is not possible for an adversary to gain access to such intermediate refreshed versions. Thereby an adversary is prevented from collecting a sufficient number of key shares belonging to the same refresh, after the period of the refresh has expired.

The method according to the invention, thus, allows a server to restore its current secret key share from a backup that includes an outdated version of the server's key share and a secret accumulative difference that the server receives from one or more of the other servers. In particular, the method allows recovery of the first server's share without granting the other servers the capability to restore the first server's secret key share.

The step of each server generating a secret version of its share of the difference may be performed by means of an additively homomorphic scheme, and the step of each server generating an accumulated secret version may comprise each server adding the received secret versions of the shares of the difference to the respective previous accumulated secret versions, and discarding the previous accumulated secret versions.

An additive homomorphic scheme is a scheme in which addition can be performed in the encrypted domain, i.e. $E(d_1+d_2)=E(d_1)+E(d_2)$, where E designates encryption. Thus, when an additive homomorphic scheme is applied for generating the secret versions of the shares of the difference, the respective servers may encrypt their shares, $d_i$, and forward the encrypted version, $E(d_i)$, to the other servers. The other servers may then obtain an encrypted version of the sum of shares of differences, simply by adding the encrypted versions.

Thus, according to this embodiment, the method may be performed in the following manner. For the sake of simplicity, the method will be described from the point of view of the first server, i.e. only shares which are held by the first server are described. It should, however, be noted that similar steps may also be performed by the other servers.

When the first refresh is performed, the first server generates its share, $d_1$, of the difference between the original secret key and the first refreshed secret key. This share, $d_1$, of the difference corresponds to the difference between the first server's share of the original secret key and the first server's share of the first refreshed secret key. The first server then encrypts its share, $d_1$, using the additive homomorphic scheme, thereby obtaining a secret version, $E(d_1)$, of the share, $d_1$. The secret version, $E(d_1)$, is then forwarded to at least one of the other servers. This secret version of the share, $d_1$, constitutes a first accumulated secret version, $A_1=E(d_1)$.

When the second refresh is performed, the first server similarly generates its share, $d_2$, of the difference between the first refreshed secret key and the second refreshed secret key. Thereby the difference between the first server's share of the original secret key and the first server's share of the second refreshed secret key is $d_1+d_2$.

The first server then decrypts its share, $d_2$, using the additive homomorphic scheme, thereby obtaining a secret version, $E(d_2)$, of the share, $d_2$. The secret version, $E(d_2)$, is then forwarded to at least one of the other servers. In response to the receipt of the secret version, $E(d_2)$, of the second share, the other servers generate a second accumulated secret version, $A_2$, of the first server's share, $d_1+d_2$, of the difference between the original secret key and the second refreshed secret key, by adding the newly received secret version, $E(d_2)$, to the previously received secret version, $E(d_1)$, thereby obtaining $A_2=E(d_1)+E(d_2)=A_1+E(d_2)$. Since E represents an additive homomorphic encryption scheme, the accumulated secret version is in fact a secret version of the accumulated difference, i.e. $A_2=E(d_1)+E(d_2)=E(d_1+d_2)$. Once the second accumulated secret version, $A_2$, has been generated, the servers discard the first accumulated secret version, $A_1$.

When the third refresh is performed, the steps described above are repeated, and a third accumulated secret version, $A_3$, is generated, where $A_3=A_2+E(d_3)=E(d_1+d_2+d_3)$, and the previous accumulated secret version, $A_2$, is discarded.

For each refresh, this is repeated, and thereby the servers, at all times, hold the latest version of the accumulated secret version, $A_n=E(d_1+d_2+...+d_n)$, but no previous versions of the accumulated secret version.

When a backup of the first server is required, the first server retrieves its share of the original secret key from the backup storage, and requests the accumulated secret version of the difference from the other servers. At least one of the other servers then provides the currently valid version of the accumulated secret version, $A_n$, to the first server. The first server is then able to decrypt the received accumulated secret version, $A_n$, thereby obtaining the actual difference, $d_1+d_2+...+d_n$, between the first server's share of the original secret key and the first server's share of the currently valid refreshed secret key. Accordingly, the first server can restore its share of the currently valid refreshed secret key by adding the accumulated difference to the restored share of the original secret key. Accordingly, the share of the currently valid refreshed key is restored without revealing any of the intermediate shares.

One example of an additive homomorphic scheme is Pallier's public key encryption scheme.

The additive homomorphic scheme may be a public-key encryption scheme, and the step of the first server creating a backup may comprise storing a private decryption key as part of the backup. According to this embodiment, the private decryption key is required when the first server needs to decrypt the accumulated secret version received from the other server(s), but not necessarily for anything else. By storing the private decryption key as part of the backup, it is ensured that it is difficult for an adversary to gain access to the private encryption key, since the backup storage is only accessed when it is necessary to restore the first server from the backup. On the other hand, when this situation occurs, the first server retrieves the contents of the backup storage, including the private decryption key, and thereby the private decryption key is available to the first server for decrypting the received accumulated secret version as part of restoring the share of the currently valid secret key. When creating a backup, the first server may further delete the private decryption key from the first server once it has been stored in the backup storage. Similarly, when restoring a backup the first server may delete the private decryption key from the first server once it has used it to decrypt the received secret accumulative versions of the difference. This will increase security since it will limit the time frame in which an adversary who compromises the first server will be able to gain access to the private decryption key.

The step of each server generating a secret version of its share of the difference may comprise each server creating a sharing of its share of the difference and distributing the shares among at least some of the other servers. The sharing may, e.g., be in the form of a secret sharing. According to this embodiment, the secret version of the share of the difference is in the form of the created sharing. Thereby none of the other servers will be in the possession of the entire share of the difference. According to this embodiment, when the servers receive a share of the first server's share of the next distributed difference, it adds this to its previous share of the first server's share of the distributed difference to obtain the new accumulated share of the first server's share of the distributed difference, and it discards its old share. Creating a sharing in this manner may be applied as an alternative to the public-key encryption scheme described above. As an alternative, these two approaches may be combined in the sense that the shares being distributed to the other servers may additionally be encrypted.

Each refresh may comprise the steps of:

-  the servers creating a sharing of zero, and each server adding its share of the sharing of zero to its share of previous secret key, thereby creating the refreshed secret key being distributed among the servers, and discarding their shares of the previous secret key, the sharing of zero constituting the distributed difference, and

-  each server generating a secret version of its share of the sharing of zero and sharing the secret version with at least some of the other servers.

According to this embodiment, the refreshed secret key is generated by the servers generating, amongst them, a sharing of zero, such as a secret sharing of zero, and subsequently adding this sharing of zero to the previous secret key. This is done by each server adding its share of the sharing of zero to its share of the previous secret key. Furthermore, according to this embodiment, the shares of the distributed difference held by the servers are the shares of the sharing of zero which are held by the respective servers.

As an alternative, the servers may generate the refreshed secret key by creating a new sharing of the previous secret key, and derive the distributed difference from their respective shares of the new refreshed secret key and the previous refreshed secret key.

The method may further comprise the step of storing the backup in an offline storage. According to this embodiment, the backup is not accessible online, and an adversary would therefore need to physically break into the offline storage in order to gain access to the backup. The offline storage could, e.g., be in the form of a portable storage medium, such as a USB storage or a disk, which may be locked into a safe or another restricted area. The location of the offline storage may differ from the locations of the servers, in which case it is necessary to physically transfer the backup between the locations when the backup is created, as well as when restoration of the backup is required. This makes it cumbersome to create backups, and therefore backups may not be created very frequently. This makes the method of the invention very relevant, because it can therefore be expected that a high number of refreshes of the secret key will be performed between two backups.

Each step of refreshing the secret key may further comprise the step of each server verifying correctness of the received secret versions of the shares of the difference by verifying a zero-knowledge proof.

Apart from attempting to gain unauthorised access to the secret key, an adversary may also seek to actively corrupt the system by providing false information to honest parties, i.e. honest servers. For instance, an adversary may corrupt one of the servers, e.g. the first server. In this case the shares of differences received by the other servers and originating from the first server may be corrupted. Accordingly, there may be a need to be able to detect if one of the parties deviates from the prescribed protocol. According to this embodiment, this is done by verifying a zero-knowledge proof.

In the present context the term 'zero-knowledge proof' should be interpreted to mean a method in which one party proves to another party that he knows a secret without revealing any details about the secret. Thus, according to this embodiment, the first server proves that the secret version of the share of the difference forwarded to the other servers is indeed a secret version of the actual share. The first server does this in zero knowledge, i.e. without revealing any details about the actual share. The other servers then verify the proof, and if it turns out that the proof is invalid, the other servers will know that the first server is corrupted, and they may cause the refresh protocol to abort.

Alternatively or additionally, the method may further comprise the step of the first server verifying correctness of the received accumulated secret version by verifying a zero-knowledge proof.

This is similar to the embodiment described above. However, in this case it is the first server which ensures that the accumulated secret version, which it receives during restoration from the backup, is in fact correct. Thereby it is possible for the first server to detect if one or more of the other servers is corrupt and/or deviates from the prescribed protocol. If this is the case, the first server may cause the restoring process to abort.

The distributed secret key may be a secret signature key. According to this embodiment, the system is applied for providing digital signatures, using the distributed secret key.

Furthermore, according to this embodiment, correctness of the secret shares of the differences and/or of the accumulated secret version may be ensured by the servers generating a test signature, and the parties may verify that the test signature is valid and correct.

As an alternative, the distributed secret key may be a secret encryption key. According to this embodiment, the system is applied for providing encryption and decryption of data, using the distributed secret key.

The method may further comprise the step of the first server creating a new backup, and repeating the steps of the servers refreshing the original secret key at least once, and the step of the first server restoring its share of the original secret key may comprise restoring a share of the secret key stored with the new backup.

According to this embodiment, the process described above is repeated each time a new backup is created, and when restoration from a backup is required, the latest available backup is used. Thus, the distributed secret key which was valid at the time where the new backup was created, is regarded as the original secret key in the sense of the claimed method.

BRIEF DESCRIPTION OF THE DRAWINGS

The invention will now be described in further detail with reference to the accompanying drawings in which

Fig. 1 is a diagram illustrating a prior art method, and

Figs. 2-8 are diagrams illustrating methods according to seven different embodiments of the invention.

DETAILED DESCRIPTION OF THE DRAWINGS

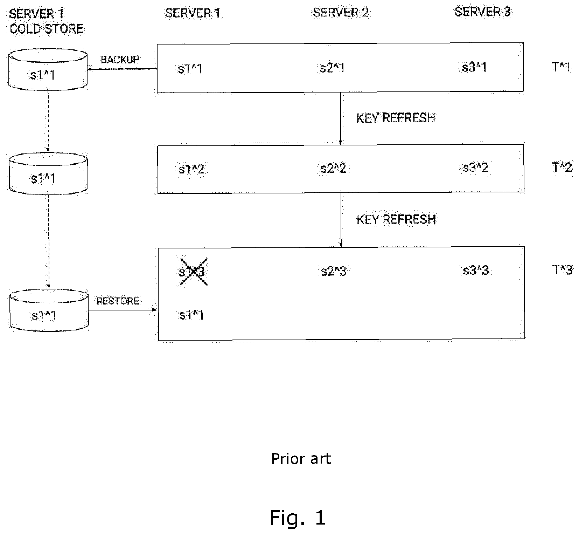

Fig. 1 is a diagram illustrating a prior art method for restoring a distributed secret key from a backup storage. In the example illustrated in Fig. 1, an original secret key, s, is distributed among three servers, i.e. server 1, server 2 and server 3. Accordingly, each server holds a share of the secret key, and none of the servers is in the possession of all shares, and thereby the entire key. Thus, server 1 holds share $s1^1$, server 2 holds share $s2^1$, and server 3 holds share $s3^1$. It should be noted that the secret key may, alternatively, be distributed among two servers or among four or more servers, and that the presence of three servers in Fig. 1 is merely illustrative.

At time $T^1$, which may be immediately after the original secret key was distributed among the servers, server 1 stores a backup in a cold store. The backup comprises server 1's share of the original secret key, $s1^1$.

At time $T^2$, the servers refresh the distributed secret key, and each server now holds a share of the refreshed secret key. Accordingly, server 1 holds share $s1^2$, server 2 holds share $s2^2$, and server 3 holds share $s3^2$, and the previous shares are no longer valid, and have therefore been deleted.

Another refresh of the distributed secret key is performed at time $T^3$ in a similar manner. Accordingly, server 1 now holds share $s1^3$, server 2 holds share $s2^3$, and server 3 holds share $s3^3$. It should be noted that the refresh process may be repeated more times.

While the key shares $s1^3$, $s2^3$ and $s3^3$ are valid, server 1 experiences a data loss which requires a restoration from the backup. However, the key share which was stored with the backup is $s1^1$, which is no longer valid, and not the currently valid key share, $s1^3$. Server 1 is therefore not able to restore its share of the currently valid secret key from the backup.

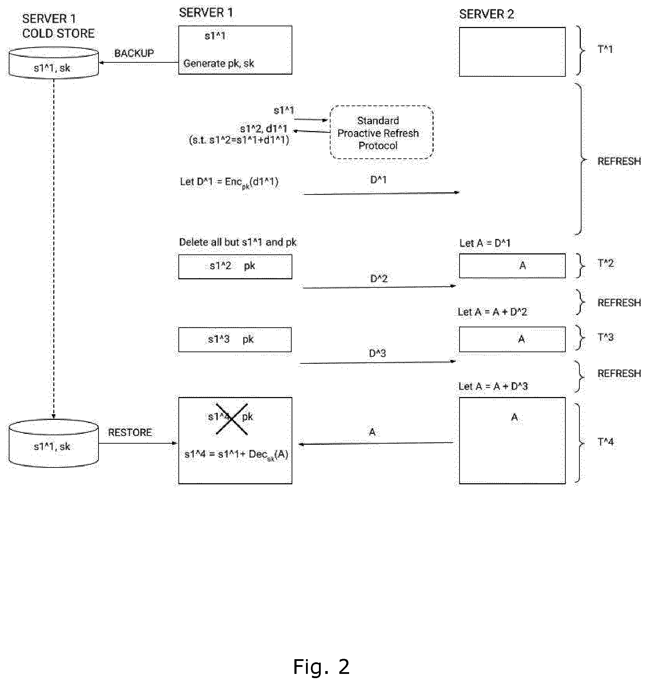

Fig. 2 is a diagram illustrating a method according to a first embodiment of the invention. In Fig. 2 only two servers, server 1 and server 2, are illustrated for the purpose of simplicity. However, it should be noted that three or more servers could, alternatively, be applied.

Similarly to the prior art method described above with reference to Fig. 1, a secret key is distributed among the two servers, and server 1 stores a backup of its share, $s1^1$, in a cold store. However, server 1 also creates a key pair with a private key, sk, and a public key, pk, and the private key, sk, is stored in the cold store with the backup. The key pair constitutes an additive homomorphic encryption scheme.

Also similar to the prior art method described above with reference to Fig. 1, the distributed secret key is refreshed a number of times. In the method illustrated in Fig. 2, each refresh of the distributed secret key is performed in the following manner.

The distributed secret key is refreshed in a standard manner, thereby generating a refreshed distributed secret key and a difference between the refreshed secret key and the previous secret key, the difference constituting a sharing of zero among the servers. This may be done in at least two ways. The servers may generate the sharing of zero, and each server may add its share of the sharing of zero to its share of the previous secret key, and thereby obtain its share of the refreshed key. As an alternative, the servers may generate the refreshed key, e.g. by creating a new sharing of the previous key, and each server may derive its share of the sharing of zero as the difference between its share of the previous secret key and its share of the refreshed secret key.

In any event, after the first refresh of the secret key, at time $T''2$, the first server holds share $s1^2$ of the refreshed secret key, and $s1^2=s1^1+d1^1$, where $d1^1$ is server 1's share of the sharing of zero.

Server 1 then encrypts its share of the sharing of zero, $d1^1$, using the public key of the previously generated key pair, thereby obtaining $D^1=Enc_{pk}(d1^1)$, and provides $D^1$ to the other servers, including server 2. Server 1 further deletes $s1^1$, $d1^1$ and sk, sk thereby being stored in the backup storage only.

Upon receipt of $D^1$, server 2 generates an accumulated version of the received encrypted shares of the sharing of zero. Since $D^1$ relates to the first refresh, it is also the first encrypted share which server 2 receives, and therefore the accumulated version is, in this case, $A^1=D^1$.

During the next refresh, server 1 provides encrypted share, $D^2=Enc_{pk}(d1^2)$ to server 2, and server 2 generates a new accumulated version, $A^2=A^1+D^2=D^1+D^2$, and deletes $A^1$. Furthermore, for each subsequent refresh, server 2 generates a new accumulated version, $A^n=A^{(n-1)}+D^n=D^1+D^2+...+D^{(n-1)}+D^n$, and deletes the previous accumulated version, $A^{(n-1)}$. Since the encryption applied to the shares of the sharing of zero is performed using an additive homomorphic encryption scheme, the sum of the encrypted versions is equal to the encrypted versions of the sum, i.e. $Enc_{pk}(d1^1+d1^2)=Enc_{pk}(d1^1)+Enc_{pk}(d1^2)=D^1+D^2$. Accordingly, the accumulated version held by server 2 corresponds to an encrypted version of the sum of server 1's shares of sharings of zero associated with each refresh performed since the backup was created.

In the method illustrated in Fig. 2, server 1 experiences a data loss which requires restoration from the backup, while secret key share $s1^4$ is valid. Accordingly, server 1 restores its share of the original distributed secret key, i.e. $s1^1$, and the private key, sk, from the backup. Furthermore, server 1 requests the currently valid accumulated version, $A^4$, from the other servers, and at least server 2 returns $A^4$ to server 1.

Server 1 then decrypts $A^4$, using the restored private key, sk, and thereby obtains the sum of all the differences which has been added to server 1's share of the original distributed secret key. In other words:

$$\text{Dec}_{sk}(A\hat{}4) \quad = \text{Dec}_{sk}(D\hat{}1 + D\hat{}2 + D\hat{}3)$$

$$= \text{Dec}_{sk}(D\hat{}1) + \text{Dec}_{sk}(D\hat{}2) + \text{Dec}_{sk}(D\hat{}3)$$

$$= d1\hat{}1 + d1\hat{}2 + d1\hat{}3$$

Thus, server 1 can restore its share of the valid distributed key, s1^4, by adding the decrypted accumulated version, $\text{Dec}_{sk}(A\hat{}4)$, to the restored original share, s1^1, because s1^4=s1^1+d1^1+d1^2+d1^3=s1^1+$\text{Dec}_{sk}(A\hat{}4)$.

Furthermore, the valid share is restored without revealing anything about any of the intermediate refreshed key shares s1^2 and s1^3 to server 1.

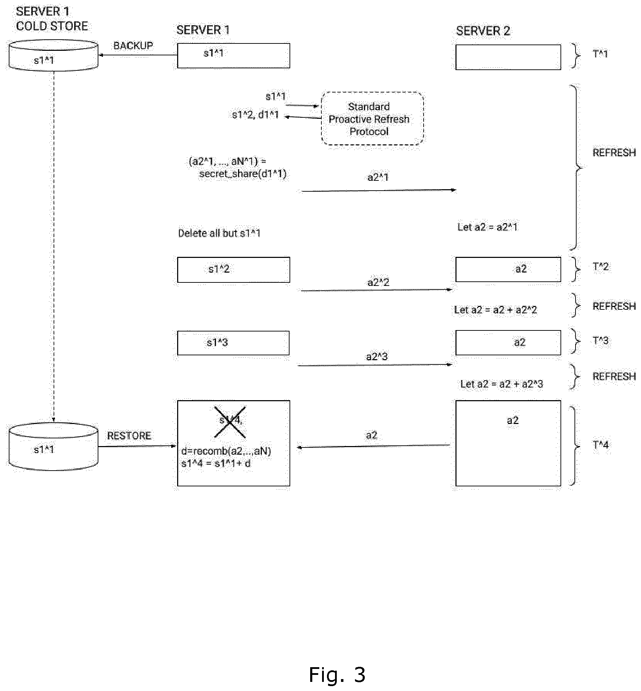

Fig. 3 is a diagram illustrating a method according to a second embodiment of the invention. The method is very similar to the method illustrated in Fig. 2, and it will therefore not be described in detail here. However, in the method illustrated in Fig. 3, the refresh of the distributed secret key is performed in the following manner.

Server 1 obtains a share of the refreshed secret key and a share of the sharing of zero constituting the difference between the refreshed key and the previous key, in the manner described above with reference to Fig. 2. A secret sharing of server 1's share of the difference, d1^1 in the first refresh, is then created, and each of the other servers receives a share. For instance, server 2 receives share a2^1.

The other servers, including server 2, generate accumulated versions, A2^n, of the differences by, during each refresh, adding the newly received share to the previous accumulated version, A2^(n-1), and subsequently deleting the previous accumulated version, A2^(n-1).

While secret key share s1^4 is valid, server 1 experiences a data loss which requires restoration from the backup. Accordingly, server 1 restores its share of the original distributed secret key, s1^1, from the backup, and requests the accumulated versions from the other servers. The other servers provide their accumulated versions to server 1. For instance, server 2 provides a2^4, and server i provides ai^4. Server 1 is then able to restore the sum of the differences associated with each refresh by recombining the accumulated versions received from the other servers, and by adding the restored sum to the restored original share, s1^1, the valid share, s1^4, is obtained. Also in this embodiment, nothing is revealed about any of the intermediate refreshed key shares s1^2 and s1^3.

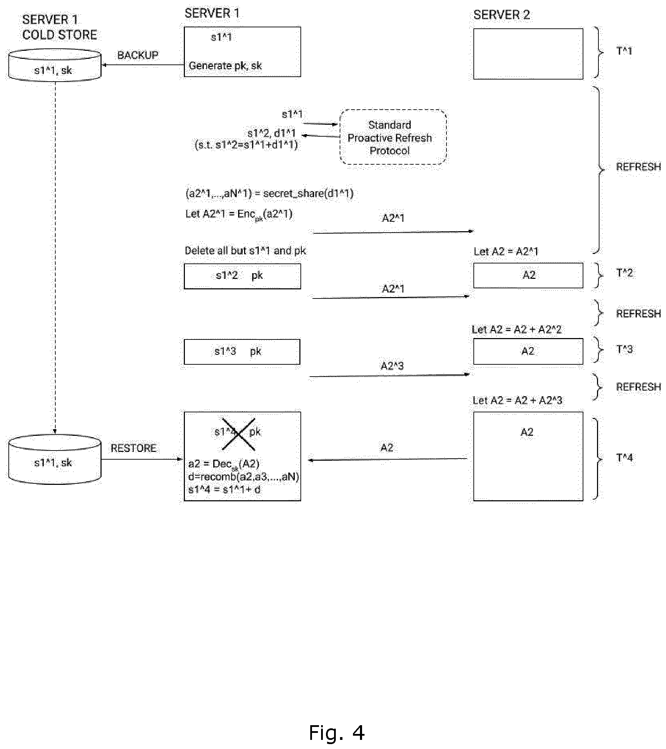

Fig. 4 is a diagram illustrating a method according to a third embodiment of the invention. The method illustrated in Fig. 4 is very similar to the methods illustrated in Figs. 2 and 3, and it will therefore not be described in detail here. However, in the embodiment of Fig. 4, server 1's share of the difference, d1^1, is secret shared, as described above with reference to Fig. 3, and the secret shares are encrypted using an additively homomorphic encryption scheme, as described above with reference to Fig. 2, before being provided to the respective other servers. Accordingly, the embodiment of Fig. 4 may be regarded as a combination of the embodiment of Fig. 2 and the embodiment of Fig. 3. This adds additional security to the system.

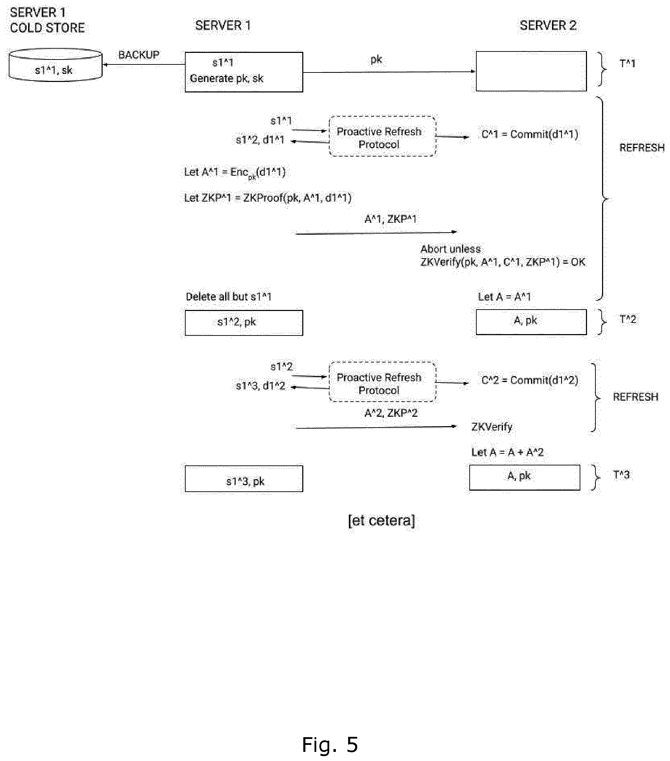

Fig. 5 is a diagram illustrating a method according to a fourth embodiment of the invention. The method of Fig. 5 is very similar to the method illustrated in Fig. 2, and it will therefore not be described in detail here.

In the method illustrated in Fig. 5, server 1 generates a zero-knowledge proof, ZKP, during each refresh, and forwards this to the other servers along with the encrypted version of its share of the sharing of zero. The other servers then verify the zero-knowledge proof. If at least one server finds that the zero-knowledge proof is not valid, then the refresh process is aborted.

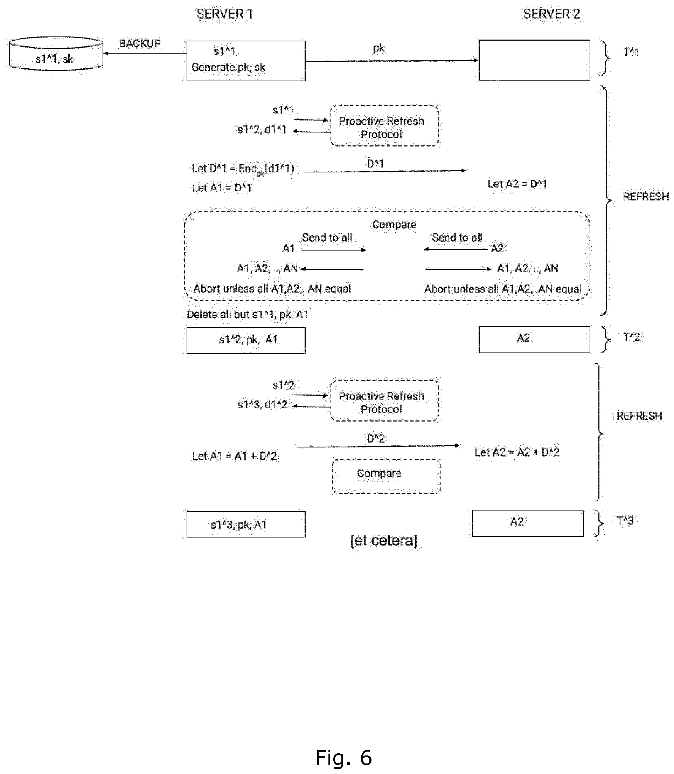

Fig. 6 is a diagram illustrating a method according to a fifth embodiment of the invention. The method of Fig. 6 is very similar to the method illustrated in Fig. 2, and it will therefore not be described in detail here. However, in the method illustrated in Fig. 6, the servers compare their accumulated versions during each refresh by sending their version to all of the other servers, and each server comparing the received versions. In the case that at least one of the servers receives accumulated versions which are not identical, the refresh process is aborted.

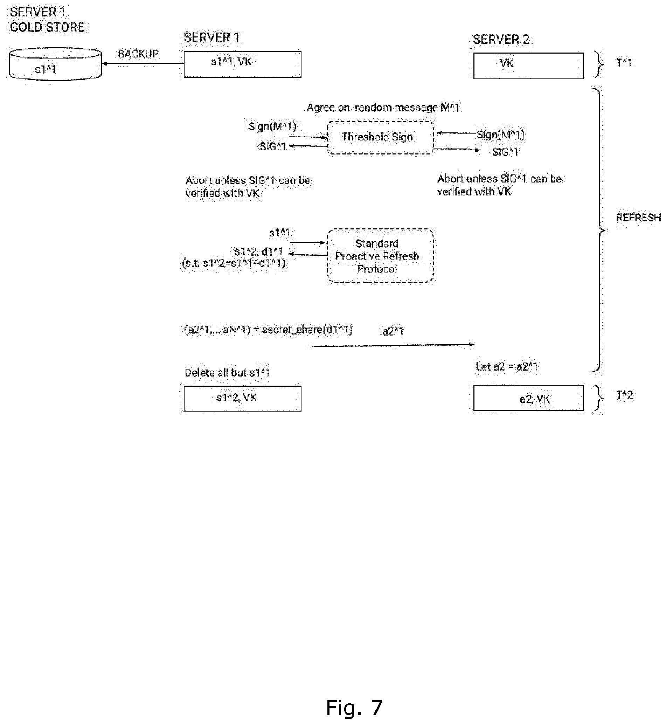

Fig. 7 is a diagram illustrating a method according to a sixth embodiment of the invention. The method of Fig. 7 is very similar to the method illustrated in Fig. 3, and it will therefore not be described in detail here. However, in the embodiment of Fig. 7, each refresh includes an additional verification step performed before the refreshed secret key and the sharing of zero are generated.

The distributed secret key is, in this case, a signature key which is used for generating digital threshold signatures, and each server is in the possession of a public verification key, VK. In the additional verification step, the servers agree on a random message, M^1, and they then sign the random message, using their respective shares of the distributed key, thereby generating a signature, SIG^1. The generated signature is provided to each of the servers, and each server verifies the signature by means of the public verification key, VK. The refresh process is aborted if at least one server is unable to verify the signature.

It should be noted that, even though Figs. 4-7 only illustrate the refreshes of the distributed secret key, it should be understood that restoration from the backup can also be performed, essentially in the manner described above with reference to Fig. 2 or Fig. 3.

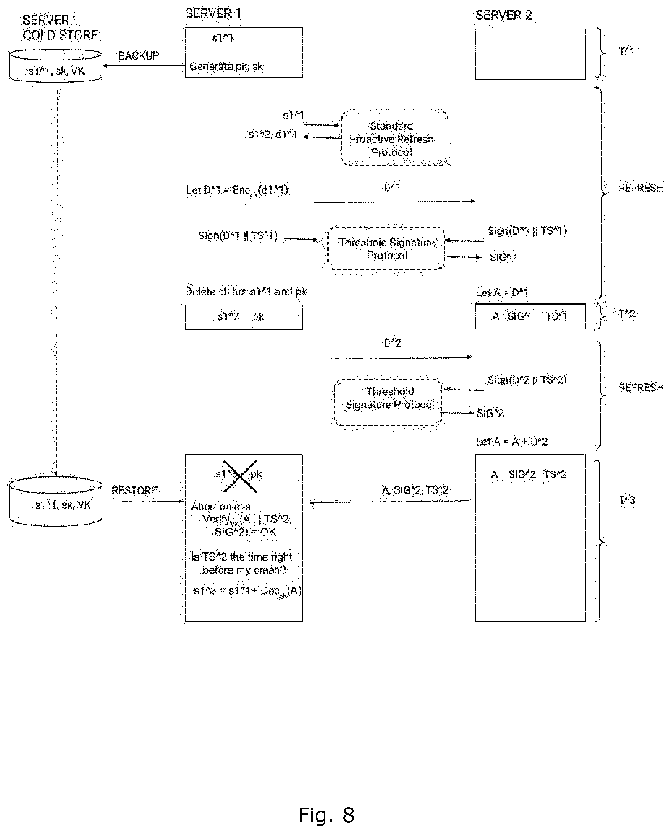

Fig. 8 is a diagram illustrating a method according to a seventh embodiment of the invention. The method of Fig. 8 is very similar to the method illustrated in Fig. 2, and it will therefore not be described in detail here.

The method illustrated in Fig. 8 uses, similarly to the embodiment of Fig. 7, a threshold signature scheme, but in contrast to the embodiment of Fig. 7, in the method of Fig. 8 the distributed secret key does not have to be the same as the distributed key of the threshold signature scheme. In the embodiment of Fig. 8 the public verification key of the threshold signature scheme (VK) is stored in the backup

In the embodiment of Fig. 8, the servers sign the encrypted share of the difference, $D^1$, using the distributed signature key, thereby generating a signature, $SIG^1$. Each of the servers stores $SIG^1$ along with the accumulated version of the difference.

When restoration is required, and server 1 therefore requests the accumulated version from the other servers, the other servers also provide the currently valid signature, in the example of Fig. 8 $SIG^2$. Server 1 then verifies the signature, $SIG^2$, and if it is not able to do so, the restoration process is aborted.

Optionally, a time stamp may be included, in which case server 1 also verifies that $T^2$ in fact represents the time immediately before the data loss.

## Claims

1. A method for restoring a distributed secret key from a backup storage, the method comprising the steps of:

   - generating an original secret key and distributing the original secret key among two or more servers, each server thereby holding a share of the original secret key and none of the servers holding all shares of the original secret key,
   - a first server creating a backup, the backup containing at least the share of the original secret key which is held by the first server,
   - the servers refreshing the original secret key at least once, where each refresh comprises the steps of:

      - the servers generating a refreshed distributed secret key and a distributed difference between the previous secret key and the refreshed secret key, each server holding a share of the difference, and the difference constituting a sharing of zero, and the servers discarding their shares of the previous secret key,
      - each server generating a secret version of its share of the difference and sharing the secret version with at least some of the other servers, and
      - each server generating an accumulated secret version of the shares of the difference received from the other servers based on the received secret versions of the shares of the difference and previous accumulated secret versions,

   - the first server restoring its share of the original secret key from the backup and requesting the accumulated secret version of its share of the difference from the other servers,
   - at least some of the other servers providing the accumulated secret version of the first server's share of the difference to the first server, and
   - the first server restoring its share of the latest refreshed secret key from the received accumulated secret version and the restored share of the original secret key.

2. A method according to claim 1, wherein the step of each server generating a secret version of its share of the difference is performed by means of an additively homomorphic scheme, and wherein the step of each server generating an accumulated secret version comprises each server adding the received secret versions of the shares of the difference to the respective previous accumulated secret versions, and discarding the previous accumulated secret versions.

3. A method according to claim 2, wherein the additive homomorphic scheme is a public-key encryption scheme, and wherein the step of the first server creating a backup comprises storing a private decryption key as part of the backup.

4. A method according to claim 2 or 3, wherein the step of each server generating a secret version of its share of the difference comprising each server creating a sharing of its share of the difference and distributing the shares among at least some of the other servers.

5. A method according to any of the preceding claims, wherein each refresh comprises the steps of:

- the servers creating a sharing of zero, and each server adding its share of the sharing of zero to its share of previous secret key, thereby creating the refreshed secret key being distributed among the servers, and discarding their shares of the previous secret key, the sharing of zero constituting the distributed difference, and
- each server generating a secret version of its share of the sharing of zero and sharing the secret version with at least some of the other servers.

6. A method according to any of the preceding claims, further comprising the step of storing the backup in an offline storage.

7. A method according to any of the preceding claims, wherein each step of refreshing the secret key further comprises the step of each server verifying correctness of the received secret versions of the shares of the difference by verifying a zero-knowledge proof.

8. A method according to any of the preceding claims, further comprising the step of the first server verifying correctness of the received accumulated secret version by verifying a zero-knowledge proof.

9. A method according to any of the preceding claims, wherein the distributed secret key is a secret signature key.

10. A method according to any of claims 1-8, wherein the distributed secret key is a secret encryption key.

11. A method according to any of the preceding claims, further comprising the step of the first server creating a new backup, and repeating the steps of the servers refreshing the original secret key at least once, and wherein the step of the first server restoring its share of the original secret key comprises restoring a share of the secret key stored with the new backup.


**Patentansprüche**

1. Verfahren zum Wiederherstellen eines verteilten geheimen Schlüssels aus einem Sicherungsspeicher, wobei das Verfahren folgende Schritte umfasst:

- Generieren eines originalen geheimen Schlüssels und Verteilen des originalen geheimen Schlüssel an zwei oder mehrere Server, wobei jeder Server dadurch einen Anteil an dem originalen geheimen Schlüssel besitzt und keiner der Server alle Anteile an dem originalen geheimen Schlüssel besitzt,
- ein erster Server erstellt eine Sicherung, wobei die Sicherung mindestens den Anteil an dem originalen geheimen Schlüssel enthält, den der erste Server besitzt,
- wobei die Server den originalen geheimen Schlüssel mindestens einmal aktualisieren, wobei jede Aktualisierung folgende Schritte umfasst:

  - die Server generieren einen aktualisierten verteilten geheimen Schlüssel und eine verteilte Differenz zwischen dem vorhergehenden geheimen Schlüssel und dem aktualisierten geheimen Schlüssel, wobei jeder Server einen Anteil an der Differenz besitzt, und die Differenz ein Null-Teilen ist, und die Server ihre Anteile an dem vorherigen geheimen Schlüssel verwerfen,
  - jeder Server generiert eine geheime Version seines Anteils an der Differenz und teilt die geheime Version mit mindestens einigen der anderen Server, und
  - jeder Server generiert eine kumulierte geheime Version der Anteile an der Differenz, die von den anderen Servern empfangen werden, basierend auf den empfangenen geheimen Versionen der Anteile an der Differenz und vorhergehenden kumulierten geheimen Versionen,

- der erste Server stellt seinen Anteil an dem originalen geheimen Schlüssel aus der Sicherung wieder her und fragt die anderen Server nach der kumulierten geheimen Version seines Anteils an der Differenz,
- mindestens einige der anderen Server stellen dem ersten Server die kumulierte geheime Version des Anteils des ersten Servers an der Differenz bereit, und
- der erste Server stellt seinen Anteil an dem neuesten aktualisierten geheimen Schlüssel aus der empfangenen kumulierten geheimen Version und dem wiederhergestellten Anteil an dem originalen geheimen Schlüssel wieder her.

2. Verfahren nach Anspruch 1, wobei der Schritt, bei dem jeder Server eine geheime Version seines Anteils an der Differenz erstellt, anhand eines additiv homomorphen Schemas erfolgt, und wobei der Schritt, bei dem jeder Server eine kumulierte geheime Version erstellt, umfasst, dass jeder Server die empfangenen geheimen Versionen der Anteile an der Differenz zu den jeweiligen vorhergehenden kumulierten geheimen Versionen hinzufügt und die vorhergehenden kumulierten geheimen Versionen verwirft.

3. Verfahren nach Anspruch 2, wobei das additive homomorphe Schema ein Verschlüsselungsschema mit einem öffentlichen Schlüssel ist, und wobei der Schritt, bei dem der erste Server eine Sicherung erstellt, das Speichern eines privaten Entschlüsselungsschlüssels als Teil der Sicherung umfasst.

4. Verfahren nach Anspruch 2 oder 3, wobei der Schritt, bei dem jeder Server eine geheime Version seines Anteils an der Differenz generiert, umfasst, dass jeder Server ein Teilen seines Anteils an der Differenz erstellt und die Anteile an mindestens einige der anderen Server verteilt.

5. Verfahren nach einem der vorhergehenden Ansprüche, wobei jede Aktualisierung folgende Schritte umfasst:

   - die Server erstellen ein Null-Teilen, und jeder Server fügt seinen Anteil an dem Null-Teilen zu seinem Anteil an dem vorhergehenden geheimen Schlüssel hinzu, wodurch der aktualisierte geheime Schlüssel erstellt wird, der an die Server verteilt wird, und sie verwerfen ihre Anteile an dem vorhergehenden geheimen Schlüssel, wobei das Null-Teilen die verteilte Differenz ist, und
   - jeder Server generiert eine geheime Version seines Anteils an dem Null-Teilen, und teilt die geheime Version mit mindestens einigen der anderen Server.

6. Verfahren nach einem der vorhergehenden Ansprüche, ferner umfassend den Schritt des Speicherns der Sicherung in einem Offline-Speicher.

7. Verfahren nach einem der vorhergehenden Ansprüche, wobei jeder Schritt des Aktualisierens des geheimen Schlüssels ferner den Schritt umfasst, dass jeder Server die Richtigkeit der empfangenen geheimen Versionen der Anteile an der Differenz durch Überprüfen eines Null-Wissen-Beweises überprüft.

8. Verfahren nach einem der vorhergehenden Ansprüche, ferner umfassend den Schritt, bei dem der erste Server die Richtigkeit der empfangenen kumulierten geheimen Version durch Überprüfen eines Null-Wissen-Beweises überprüft.

9. Verfahren nach einem der vorhergehenden Ansprüche, wobei der verteilte geheime Schlüssel ein geheimer Signaturschlüssel ist.

10. Verfahren nach einem der Ansprüche 1 bis 8, wobei der verteilte geheime Schlüssel ein geheimer Verschlüsselungsschlüssel ist.

11. Verfahren nach einem der vorhergehenden Ansprüche, ferner umfassend den Schritt, bei dem der erste Server eine neue Sicherung erstellt, und das Wiederholen der Schritte, bei denen die Server den originalen geheimen Schlüssel mindestens einmal aktualisieren, und wobei der Schritt, bei dem der erste Server seinen Anteil an dem originalen geheimen Schlüssel wiederherstellt, das Wiederherstellen eines Anteils an dem geheimen Schlüssel, der mit der neuen Sicherung gespeichert wird, umfasst.

## Revendications

1. Procédé de restauration d'une clé secrète distribuée à partir d'un stockage de sauvegarde, le procédé comprenant les étapes :

   - de génération d'une clé secrète d'origine et de distribution de la clé secrète d'origine entre deux serveurs ou plus, chaque serveur détenant ainsi une part de la clé secrète d'origine et aucun des serveurs ne détenant toutes les parts de la clé secrète d'origine,
   - de création par un premier serveur d'une sauvegarde, la sauvegarde contenant au moins la part de la clé secrète d'origine qui est détenue par le premier serveur,
   - d'actualisation par les serveurs de la clé secrète d'origine au moins une fois, où chaque actualisation comprend les étapes :

- de génération par les serveurs d'une clé secrète distribuée actualisée et d'une différence distribuée entre la clé secrète précédente et la clé secrète actualisée, chaque serveur détenant une part de la différence, et la différence constituant un partage de zéro, et les serveurs rejetant leurs parts de la clé secrète précédente,
- de génération par chaque serveur d'une version secrète de sa part de la différence et de partage de la version secrète avec au moins certains des autres serveurs, et
- de génération par chaque serveur d'une version secrète accumulée des parts de la différence reçue à partir des autres serveurs sur la base des versions secrètes reçues des parts de la différence et de versions secrètes accumulées précédentes,

- de restauration par le premier serveur de sa part de la clé secrète d'origine à partir de la sauvegarde et de demande de la version secrète accumulée de sa part de la différence aux autres serveurs,
- de fourniture par au moins certains des autres serveurs de la version secrète accumulée de la part du premier serveur de la différence au premier serveur, et
- de restauration par le premier serveur de sa part de la dernière clé secrète actualisée à partir de la version secrète accumulée reçue et de la part restaurée de la clé secrète d'origine.

2. Procédé selon la revendication 1, dans lequel l'étape de génération par chaque serveur d'une version secrète de sa part de la différence est effectuée au moyen d'un schéma homomorphe additif, et dans lequel l'étape de génération par chaque serveur d'une version secrète accumulée comprend l'ajout par chaque serveur des versions secrètes reçues des parts de la différence aux versions secrètes accumulées précédentes respectives, et le rejet des versions secrètes accumulées précédentes.

3. Procédé selon la revendication 2, dans lequel le schéma homomorphe additif est un schéma de cryptage à clé publique, et dans lequel l'étape de création d'une sauvegarde par le premier serveur comprend le stockage d'une clé de décryptage privée en tant que partie de la sauvegarde.

4. Procédé selon la revendication 2 ou 3, dans lequel l'étape de génération par chaque serveur d'une version secrète de sa part de la différence comprend la création par chaque serveur d'un partage de sa part de la différence et la distribution des parts parmi au moins certains des autres serveurs.

5. Procédé selon l'une quelconque des revendications précédentes, dans lequel chaque actualisation comprend les étapes :

- de création par les serveurs d'un partage de zéro, et d'ajout par chaque serveur de sa part du partage de zéro à sa part de clé secrète précédente, créant ainsi la clé secrète actualisée étant distribuée parmi les serveurs, et rejetant leurs parts de la clé secrète précédente, le partage de zéro constituant la différence distribuée, et
- de génération par chaque serveur d'une version secrète de sa part du partage de zéro et de partage de la version secrète avec au moins certains des autres serveurs.

6. Procédé selon l'une quelconque des revendications précédentes, comprenant en outre l'étape de stockage de la sauvegarde dans un stockage hors ligne.

7. Procédé selon l'une quelconque des revendications précédentes, dans lequel chaque étape d'actualisation de la clé secrète comprend en outre l'étape de vérification par chaque serveur de l'exactitude des versions secrètes reçues des parts de la différence en vérifiant une preuve de connaissance nulle.

8. Procédé selon l'une quelconque des revendications précédentes, comprenant en outre l'étape de vérification par le premier serveur de l'exactitude de la version secrète accumulée reçue en vérifiant une preuve de connaissance nulle.

9. Procédé selon l'une quelconque des revendications précédentes, dans lequel la clé secrète distribuée est une clé de signature secrète.

10. Procédé selon l'une quelconque des revendications 1 à 8, dans lequel la clé secrète distribuée est une clé de cryptage secrète.

11. Procédé selon l'une quelconque des revendications précédentes, comprenant en outre l'étape de création par le premier serveur d'une nouvelle sauvegarde, et la répétition des étapes d'actualisation par les serveurs de la clé secrète d'origine au moins une fois, et dans lequel l'étape de restauration par le premier serveur de sa part de la clé secrète d'origine comprend la restauration d'une part de la clé secrète stockée avec la nouvelle sauvegarde.

SERVER 1
COLD STORE

SERVER 1

SERVER 2

SERVER 3

s1^1

BACKUP

s1^1

s2^1

s3^1

T^1

KEY REFRESH

s1^1

s1^2

s2^2

s3^2

T^2

KEY REFRESH

s1^1

RESTORE

s1^3

s2^3

s3^3

T^3

s1^1

Prior art

# Fig. 1

Fig. 2

Fig. 3

Fig. 4

Fig. 5

Fig. 6

SERVER 1
COLD STORE

| s1^1 |

BACKUP ←

SERVER 1

| s1^1, VK |

SERVER 2

| VK |  } T^1

Agree on random message M^1

Sign(M^1) →
SIG^1 ←

Threshold Sign

← Sign(M^1)
SIG^1 →

Abort unless SIG^1 can be
verified with VK

Abort unless SIG^1 can be
verified with VK

REFRESH

s1^1 →
s1^2, d1^1 ←
(s.t. s1^2=s1^1+d1^1)

Standard
Proactive Refresh
Protocol

(a2^1,...,aN^1) = secret_share(d1^1)      a2^1 →

Delete all but s1^1

Let a2 = a2^1

| s1^2, VK |

| a2, VK |  } T^2

Fig. 7

Fig. 8

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Distributed CA-based PKI for Mobile Ad Hoc Networks Using Elliptic Curve Cryptography. **CHARIK-LEIA ZOURIDAKI et al.** PUBLIC KEY INFRA-STRUCTURE; [LECTURE NOTES IN COMPUTER SCIENCE;LNCS. SPRINGER-VERLAG, 24 June 2004, 232-245